# EUROPEAN PATENT APPLICATION

(11) **EP 4 826 054 A1**
(43) Date of publication of application: **21.10.2026**
(21) Application number: 24904138.5
(22) Date of filing: 03.12.2024
(51) Int. Cl.: C22C 38/04, C22C 38/02, C22C 38/06, C22C 38/14, C22C 38/12, C22C 38/00, C21D 8/02, C21D 9/46, C23C 2/06

(54) **COLD-ROLLED STEEL SHEET AND METHOD FOR MANUFACTURING SAME**

(30) Priority: 15.12.2023 KR 20230183882
(71) Applicant: POSCO Co., Ltd, Gyeongsangbuk-do 37859 (KR)
(72) Inventor: HAN, Seong-Ho, Gwangyang-si, Jeollanam-do 57807 (KR); HA, Yu-Mi, Gwangyang-si, Jeollanam-do 57807 (KR); CHOI, Yong-Hoon, Gwangyang-si, Jeollanam-do 57807 (KR)
(74) Representative: Meissner Bolte Partnerschaft mbB
(86) International application number: PCT/KR2024/019549
(87) International publication number: WO 2025/127573

(57) **Abstract**

The present invention relates to a cold-rolled steel sheet and a manufacturing method therefor and, more specifically, to a cold-rolled steel sheet and a manufacturing method therefor, wherein the cold-rolled steel sheet is suitable for use as a material for components requiring highly complex forming, such as outer panels, e.g., vehicle side outers and the like. A preferred aspect of the present invention is to provide a cold-rolled steel sheet having excellent formability and excellent material anisotropy so as to be uniformly deformed in all directions, and a manufacturing method therefor.

## Description

### Technical Field

The present disclosure relates to a cold-rolled steel sheet and a method for manufacturing the same and, more specifically, to a cold-rolled steel sheet and a method for manufacturing the same, in which the cold-rolled steel sheet is suitable for use as a material for components requiring highly complex forming, such as outer panels, e.g., vehicle side outers and the like.

### Background Art

Recently, as automotive components have become more complex in design due to the increasing size of vehicles, the emergence of electric vehicles, and the like, demand for improved formability of automotive outer panels has been continuously increasing.

Ultra-low carbon cold-rolled steel sheets are mainly used for components requiring deep drawing, such as automotive body panels. Accordingly, elongation (El) and the Lankford value (r-value) are regarded as being very important. When the r value, a plastic strain ratio, or elongation is high, the reduction in thickness of the steel sheet during press forming is alleviated and the fracture limit is increased, thereby imparting more processing. As a result, fracture may be prevented even during processing of complex components. In addition, the anisotropy Δr and ΔEl of the r-value and elongation is also very important for component processing. That is, when Δr is large, strong earing occurs during drawing forming, making large-scale deep drawing difficult. Furthermore, when ΔEl is large, defects such as wrinkles or processing cracks are more likely to occur during press processing due to insufficient elongation in a specific direction.

In general, in order to secure high deep drawability, interstitial-free (IF) steel in which solute carbon is removed by adding carbide-forming elements such as Ti or Nb is used. When the solute carbon is removed, a large number of {111}-oriented ferrite grains are formed during the annealing process after cold rolling, thereby increasing the elongation and the r-value. In addition, in IF steel to which Ti or Nb is added, grain coarsening is induced by high-temperature coiling, followed by cold rolling and high-temperature annealing, thereby promoting the occurrence of a recrystallized {111} texture and increasing the elongation and the r-value. However, while the above-described technologies are representative technologies for improving the formability of steel, there remains a need to develop technologies capable of securing more excellent formability in order to satisfy the increasingly complex and diverse demands of recent automotive manufacturers.

To address the above-described issues, various methods for improving deep drawability of cold-rolled steel sheets by utilizing grain refinement of hot-rolled steel sheets and the like have been proposed.

Patent Document 1 proposes a method in which hot rolling is performed at a finishing temperature of Ar3 transformation point or more and Ar3 transformation point + 50°C or lower, and at a final reduction ratio of 30% or more, and cooling starts immediately after the completion of hot rolling such that the average cooling rate for 3 seconds from the start of cooling is 60°C/s or higher, and particularly, an average cooling rate for 1 second from the start of cooling is 80°C/s or higher.

Patent Document 2 proposes a method in which steel containing exceeding 0.050% Ti and 0.0003% or more of B is rolled for 5 passes or more in a dynamic recrystallization temperature range, followed by hot rolling at a finishing rolling temperature (Ar3 point - 20°C) or higher, and rapid cooling starts within 0.2 seconds after completion of the hot rolling, followed by coiling at a coiling temperature of 600°C or lower.

Patent Document 3 discloses a method for manufacturing a cold-rolled steel sheet by performing hot rolling such that rolling is completed at a temperature of (Ar3 point - 30°C) or higher, cooling the steel sheet to 750°C at an average cooling rate of 400°C/s or higher within 0.5 seconds after completion of the hot rolling, coiling the steel sheet in a temperature range of 400°C or higher and below 640°C to obtain a hot-rolled steel sheet, and then performing pickling and cold rolling. Furthermore, it is disclosed that the cold-rolled steel sheet obtained by such a method has properties including a TS-bar (average TS value by direction) of 335 MPa or less, an r-bar of 1.70 or more, and a |Δr| of 0.46 or less.

However, Patent Document 1 requires a very high final reduction ratio of 30% or more during hot rolling in order to refine the grain size of the hot-rolled steel sheet. In this case, however, there is a problem in that the rolling load is excessively high, making it difficult to apply existing facilities, and that the resulting hot-rolled steel sheet is liable to suffer from shape defects.

According to Patent Document 2, in order to stably refine the grains of a hot-rolled steel sheet in a dynamic recrystallization temperature range, it is necessary to perform rolling in a temperature range from the lower limit of the dynamic recrystallization temperature to (the lower limit of the dynamic recrystallization temperature + 80°C), with five passes or more and a total reduction ratio of 80% or more. However, this method has a problem in that it is very difficult to apply to actual production because it requires extremely precise control of the rolling temperature and pass schedule. In addition, due to the low coiling temperature of 600°C or lower, the final grain size becomes refined, which may lead to problems such as a decrease in ductility.

Patent Document 3 discloses that the stable high r-value and the low |Δr| value may be achieved by limiting the time required to cool to 750°C after the completion of the hot rolling to within 0.5 seconds. However, although Patent Document 3 enables the securing of excellent r-values, it has a drawback in that the elongation is limited to a level of 43 to 48%. In other words, as processing conditions for automotive components have recently become more complex, it does not satisfy the increasingly stringent deep drawability required for automotive body panels, such as side outer panels. Accordingly, it is necessary to set higher target values for TS-bar, r-bar, |Δr|, and |ΔTS| than those to be obtained in Patent Document 3 and to develop methods for achieving the TS-bar, r-bar, |Δr|, and |ΔTS|.

Meanwhile, the formability of the steel sheet is generally evaluated in terms of the elongation and the r-value, and Δr is used as an indicator of anisotropy. However, since in-plane anisotropy occurring during press processing the steel sheet appears in various patterns, the above indicator is insufficient to address defects such as wrinkling caused by differences in strength and elongation depending on direction, in addition to earing evaluated by Δr. Furthermore, although the steel sheet is cut into a blank according to the size of a component and is press-formed in the longitudinal direction of a coil, there are also a considerable number of cases in which the blank is rotated in a direction perpendicular to the coil length and then press-formed. In other words, even when the steel sheet is press-formed in various directions, no issues should arise during processing. To this end, it is necessary to consider improvements not only in Δr but also in ΔTS and ΔEl.

### [Related Art Document]

### [Patent Document]

(Patent Document 1) Japanese Patent Laid-Open No. 1993-112831
(Patent Document 2) Japanese Patent Laid-Open No. 2000-239786
(Patent Document 3) Japanese Patent Laid-Open No. 2010-077513

### Summary of Invention

### Technical Problem

An aspect of the present disclosure is to provide a cold-rolled steel sheet and a method for manufacturing the same.

A preferred aspect of the present disclosure is to provide a cold-rolled steel sheet having excellent formability and excellent material anisotropy so as to be uniformly deformed in all directions, and a method for manufacturing the same.

### Solution to Problem

According to an aspect of the present disclosure, a cold-rolled steel sheet includes: by wt%, carbon (C): 0.0030% or less (excluding 0%), manganese (Mn): 0.20% or less (excluding 0%), silicon (Si): 0.10% or less (excluding 0%), phosphorus (P): 0.0150% or less (excluding 0%), sulfur (S): 0.010% or less (excluding 0%), nitrogen (N): 0.0030% or less (excluding 0%), acid-soluble aluminum (sol.Al): 0.010 to 0.050%, titanium (Ti): 0.030 to 0.070%, niobium (Nb): 0.0010 to 0.010%, and the balance being Fe and other unavoidable impurities, in which Relational Equation 1 below is satisfied, and Relational Equation 2 below is satisfied. [Relational Equation 1] 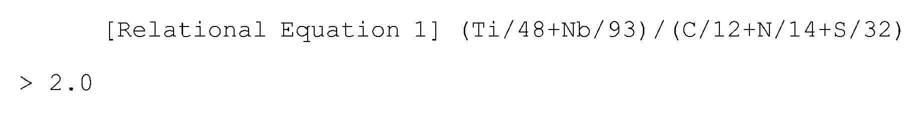 (Ti/48+Nb/93)/(C/12+N/14+S/32) > 2.0 [Relational Equation 2] $\left[X\left(222\right)+X\left(554\right)\right] / \left[X\left(200\right)+X\left(110\right)+X\left(112\right)\right] > 4.0$
(However, in the above Relational Equation 1, Ti, Nb, C, N, and S represent the content (wt%) of each alloying component, and in the above Relational Equation 2, X(222), X(554), X(200), X(110), and X(112) represent an X-ray diffraction integrated intensity ratio of planes {222}, {554}, {200}, {110}, and {200} parallel to a plane at a position of 1/4t (t: steel plate thickness) of the alloyed hot-dip galvanized steel sheet, respectively.)

The cold-rolled steel sheet may have an average grain size of 25 to 40 µm.

A standard deviation of a grain size of the cold-rolled steel sheet may be 12 or less.

A microstructure of the cold-rolled steel sheet may be composed of a ferrite matrix and other unavoidable impurity structures.

The cold-rolled steel sheet may have a yield strength (YS) : 170 MPa or less, a tensile strength (TS) : 290 MPa or less, an elongation (El) : 48% or more, a tensile strength deviation (ΔTS) : 10 MPa or less, and an elongation deviation (ΔEl) : 2% or less.

The cold-rolled steel sheet may have an average Lankford value r-bar : 1.9 or more and a Lankford value deviation (Δr) : 0.6 or less.

A method for manufacturing a cold-rolled steel sheet includes: heating a slab satisfying Relational Equation 1 below at 1100 to 1250°C , the cold-rolled steel sheet including, by wt%, carbon (C): 0.0030% or less (excluding 0%), manganese (Mn): 0.20% or less (excluding 0%), silicon (Si): 0.10% or less (excluding 0%), phosphorus (P): 0.0150% or less (excluding 0%), sulfur (S): 0.010% or less (excluding 0%), nitrogen (N): 0.0030% or less (excluding 0%), acid-soluble aluminum (sol.Al): 0.010 to 0.050%, titanium (Ti): 0.030 to 0.070%, niobium (Nb): 0.0010 to 0.010%, and the balance being Fe and other unavoidable impurities; obtaining a hot-rolled steel sheet by finishing hot rolling the heated slab at 900 to 980°C; cooling and coiling the hot-rolled steel sheet at 700 to 780°C; obtaining a cold-rolled steel sheet by cold rolling the coiled hot-rolled steel sheet at a cold reduction ratio (CR) satisfying Relational Equations 3 and 4 below; and continuously annealing the cold-rolled steel sheet at 840 to 870°C. [Relational Equation 1] 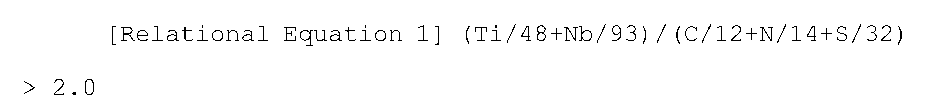 (Ti/48+Nb/93)/(C/12+N/14+S/32) > 2.0 [Relational Equation 3] 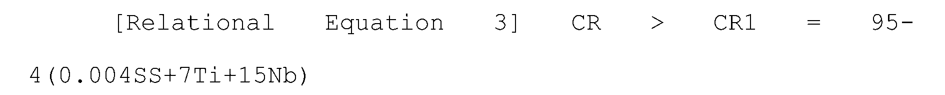 CR > CR1 = 95-4(0.004SS+7Ti+15Nb) [Relational Equation 4] 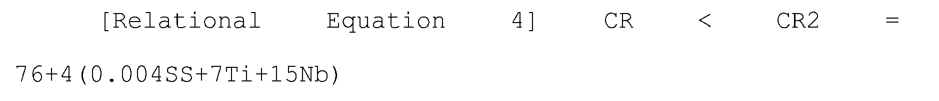 CR < CR2 = 76+4(0.004SS+7Ti+15Nb)
(However, in the above Relational Equation 1, Ti, Nb, C, N, and S represent a content (wt%) of each alloy component, and in the above Relational Equations 3 and 4, SS represents the annealing temperature, and Ti and Nb represent the content (wt%) of each alloy component.)

The manufacturing method may further include: after the continuous annealing, obtaining a hot-dip galvanized steel sheet by immersing the continuously annealed steel plate in a molten zinc plating bath at 440 to 500°C.

The manufacturing method may further include: after the obtaining of the hot-dip galvanized steel sheet, obtaining an alloyed hot-dip galvanized steel sheet by alloying the hot-dip galvanized steel sheet at 450 to 540°C.

The manufacturing method may further include: after the obtaining of the alloyed hot-dip galvanized steel sheet, temper rolling the alloyed hot-dip galvanized steel sheet with a reduction ratio of 0.20 to 1.0%.

### Advantageous Effects of Invention

According to an aspect of the present disclosure, it is possible to provide a cold-rolled steel sheet and a method for manufacturing the same.

According to another a preferred aspect of the present disclosure, it is possible to provide a cold-rolled steel sheet having excellent formability and excellent material anisotropy so as to be uniformly deformed in all directions, and a method for manufacturing the same.

### Brief Description of Drawings

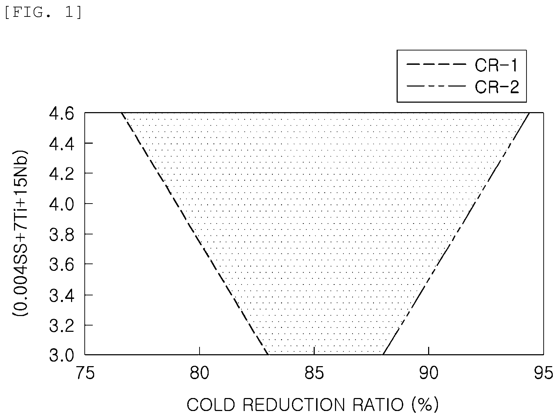

FIG. 1 illustrates a cold reduction ratio condition according to an example embodiment of the present disclosure.

### Best Mode for Invention

Hereinafter, a cold-rolled steel sheet according to an example embodiment of the present disclosure will be described. First, the alloy composition will be described. The alloy composition described below refers to wt% unless otherwise specified.

### Carbon (C): 0.0030% or less (excluding 0%)

Carbon (C) is an interstitial solid solution element that reduces ductility and deep drawability. Typically, to ensure excellent formability, solid solution C should be completely removed using carbonitride-forming elements such as Ti and Nb. However, when the C content exceeds 0.0030%, the Ti or Nb content added to remove solid solution C in the steel increases excessively, which may lead to increased manufacturing costs and deterioration of plating quality. Meanwhile, in the present disclosure, it is preferable for the C content to be as low as possible, so there is no need to specifically specify a lower limit. However, since the excessive reduction in the C content may lead to a significant increase in refining costs, the C content may be 0.00050% or more. The above C content is more advantageous for being 0.00280% or less, and more advantageous for being 0.00250% or less.

### Manganese (Mn): 0.20% or less (excluding 0%)

Manganese (Mn) generally contributes to increasing the strength of steel through solid solution strengthening, and also exhibits the effect of preventing red hot brittleness of steel caused by FeS generation by fixing S as MnS. However, in ultra-low carbon steel with added Ti, since Ti fixes S to form Ti-based sulfides, Mn remains as solid solution Mn, which increases the strength of steel and is highly likely to cause a deterioration in ductility. Therefore, in the present disclosure, the upper limit of the Mn content is limited to 0.20%. Meanwhile, in the present disclosure, since the solid solution element in the steel should be lowered as much as possible to secure the desired ductility and deep drawability, it is advantageous to also lower the Mn content as much as possible. Therefore, there is no need to specifically define a lower limit for the above Mn content, and 0% is excluded considering the amount inevitably added during the manufacturing process. The above Mn content is more advantageous for being 0.180% or less, and more advantageous for being 0.150% or less.

### Silicon (Si): 0.10% or less (excluding 0%)

Silicon (Si) is a representative oxidizing element existing in the form of oxides on the surface from the hot rolling stage and forms Si enrichment layer in the surface layer. When the above Si content exceeds 0.10%, it is difficult to completely remove the surface oxides even if pickling is performed before cold rolling. Even if all Si oxides are removed by an acid solution, the Si enrichment layer formed on the surface causes surface defects to occur after hot-dip galvanizing. Therefore, in the present disclosure, it is preferable to control the above Si content to 0.10% or less. Meanwhile, in the present disclosure, it is advantageous to lower the above Si content as much as possible. Therefore, there is no need to specifically define a lower limit for the above Si content, and 0% is excluded considering the amount inevitably added during the manufacturing process. The above Si content is more advantageous for being 0.080% or less, and more advantageous for being 0.050% or less.

### Phosphorus (P): 0.0150% (excluding 0%)

Phosphorus (P) is generally an element that exhibits the best solid solution strengthening effect in ultra-low carbon steel and is effective in securing steel strength without significantly impairing drawability. In particular, the above P easily segregates at grain boundaries and plays a role in refining grains by inhibiting grain growth during annealing. However, in the present disclosure, it is preferable to lower the above P content as much as possible to obtain grains with an average size of 25µm or more. When the above P content exceeds 0.0150%, the average grain size to be obtained by the present disclosure may not be secured, and tensile properties such as elongation may be reduced. Meanwhile, in the present disclosure, it is advantageous to lower the above P content as much as possible. Therefore, there is no need to specifically define a lower limit for the above P content, and 0% is excluded considering the amount inevitably added during the manufacturing process. It is more advantageous for the above P content to be 0.0130% or less.

### Sulfur (S): 0.010% or less (excluding 0%)

Sulfur (S) is an impurity inevitably contained in steel, and it is preferable to manage its content as low as possible. In particular, since the possibility of causing red-hot brittleness increases when the S content exceeds 0.010%, it is preferable for the S content to be within the range of 0.010% or less. Meanwhile, in the present disclosure, there is no need to specifically define a lower limit for the above S content, and 0% is excluded considering the amount inevitably added during the manufacturing process. It is more advantageous for the above S content to be 0.0080% or less.

### Nitrogen (N): 0.0030% or less (excluding 0%)

Nitrogen (N) is an impurity inevitably contained in steel, and it is preferable to manage its content as low as possible. However, since managing the N content to a very low level causes a problem of rapidly increasing steel refining costs, the upper limit is restricted to 0.0030% or less. Meanwhile, in the present disclosure, there is no need to specifically define a lower limit for the above N content, and 0% is excluded considering the amount inevitably added during the manufacturing process. The above N content is more advantageous for being 0.00250% or less, and more advantageous for being 0.0020% or less.

### Acid-soluble aluminum (sol.Al): 0.010~0.050%

Acid-soluble aluminum (sol.Al) is an element added for grain refinement and deoxidation. When the sol.Al content is below 0.010%, it is not possible to manufacture aluminum-killed steel in a normal stable state. On the other hand, when the sol.Al content exceeds 0.050%, excessive inclusions may be formed during steelmaking/continuous casting operations, which may lead to a significant decrease in ductility. Therefore, in the present disclosure, it is preferable for the content of sol.Al to have a range of 0.010 to 0.050%. The lower limit of the above sol.Al content is more advantageous at 0.0150%, and 0.020% is more advantageous. The upper limit of the above sol.Al content is more advantageous at 0.0450%.

### Titanium (Ti): 0.030 to 0.070%

Titanium (Ti) has the function of improving deep drawability and ductility by reducing solid solution C and solid solution N through the formation of carbonitrides. When the above Ti content is below 0.030%, it may be difficult to obtain the physical properties to be obtained by the present disclosure. On the other hand, when the above Ti content exceeds 0.070%, problems such as nozzle clogging during steelmaking occur along with an increase in inclusions such as Ti oxides due to excessive Ti. In addition, excessive Ti lowers powdering resistance, thereby impairing plating quality. Therefore, the Ti content preferably ranges from 0.030 to 0.070%. The lower limit of the above Ti content is more advantageous at 0.0350%, and 0.040% is more advantageous. The upper limit of the above Ti content is more advantageous at 0.0650%.

### Niobium (Nb): 0.0010 to 0.010% (excluding 0%)

Niobium (Nb) has the function of improving deep drawability and ductility by reducing solid solution C and solid solution N through the formation of carbonitrides. In addition, it has the effect of suppressing the recrystallization of austenite, thereby playing a role in refining the grain size of the hot-rolled plate. When the above Nb content is below 0.0010%, it may be difficult to sufficiently obtain the above-described effects. On the other hand, when the Nb content exceeds 0.010%, it may be difficult to obtain an average grain size of 25 µm or more to be obtained by the present invention, and accordingly, elongation is likely to decrease. Therefore, in the present disclosure, it is preferable for the Nb content to have a range of 0.0010 to 0.010%. The lower limit of the above Nb content is more advantageous at 0.00150%, and 0.0020% is more advantageous. The upper limit of the above Nb content is more advantageous at 0.00950%, and 0.0090% is more advantageous.

The remaining component is iron (Fe). However, since the unintended impurities from raw materials or the surrounding environment may inevitably be mixed in a normal manufacturing process, the unintended impurities may not be excluded. Since these impurities are known to those skilled in the ordinary manufacturing process, not all of them are specifically mentioned in this specification.

It is preferable that the cold-rolled steel sheet of the present disclosure satisfies the above-described alloy composition and simultaneously satisfies Relational Equation 1 below. [Relational Equation 1] 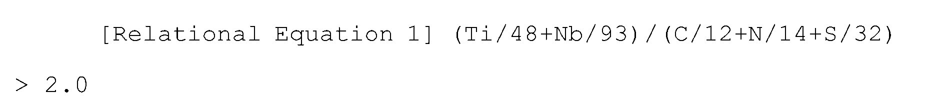 (Ti/48+Nb/93)/(C/12+N/14+S/32) > 2.0
(However, in the above Relational Equation 1, Ti, Nb, C, N, and S represent the content (wt%) of each alloying element.)

The left side of the above Relational Equation 1 is a parametric equation representing the equivalent ratio of Ti and Nb to C, N, and S, which combine with Ti and Nb to form compounds. Since a higher value of the left side implies that there are no solid solution elements in the steel, excellent formability may be expected. In addition, it may promote the development of a texture that improves deep drawability. When the above Relational Equation 1 is not satisfied, it may be difficult to fully obtain the above-described effects. Meanwhile, in the present disclosure, since a lower amount of solid solution elements is advantageous, the upper limit of the value of the left side of the above Relational Equation 1 is not specifically limited. The upper limit of the value on the left side of the above Relational Equation 1 may be determined by the upper limits of the Ti and Nb content mentioned earlier in the present disclosure.

It is preferable that the cold-rolled steel sheet of the present disclosure satisfies Relational Equation 2 below. [Relational Equation 2] $\left[X\left(222\right)+X\left(554\right)\right] / \left[X\left(200\right)+X\left(110\right)+X\left(112\right)\right] > 4.0$
(However: In the above Relational Equation 2, X(222), X(554), X(200), X(110), and X(112) represent the X-ray diffraction integrated intensity ratios of the {222} plane, {554} plane, {200} plane, {110} plane, and {200} plane, respectively, which are parallel to a plane at the position of 1/4t (t: steel plate thickness) of a steel plate.)

In terms of the formability, it is generally known that, in thin steel plates having a [111] texture, the r-value increases as the amount of Gamma texture such as {111} and {554} planes parallel to the sheet surface increases, whereas the r-value decreases as the amount of alpha texture such as {100}, {110}, and {112} planes parallel to the sheet surface increases. The above Relational Equation 2 is an equation for improving in-plane anisotropy. The inventors have confirmed that, in a steel sheet in which the X-ray diffraction integrated intensity ratios of the {222}, {554}, {200}, {110}, and {112} planes parallel to the sheet surface at a position of 1/4t (t: thickness of the steel sheet), i.e., X(222), X(554), X(200), X(110), and X(112), satisfy the conditions of Relational Equation 2, excellent in-plane anisotropy may be secured, exhibiting a Δr of 0.6 or less. Here, the X-ray diffraction integrated intensity ratio refers to the relative intensity when based on the X-ray diffraction integrated intensity of a non-oriented standard sample. In addition, the value of the left side of the above Relational Equation 2 may be obtained using a conventional X-ray diffraction device, such as an energy-dispersive type.

The average grain size of the cold-rolled steel sheet of the present disclosure may be 25 to 40 µm. In addition, the standard deviation of the grain size may be 12 or less. The anisotropy indices ΔTS and ΔEl, which are obtained in the present disclosure, are greatly influenced by microstructural characteristics. Furthermore, in order to secure the mechanical properties to be obtained by the present disclosure, such as a tensile strength TS of 290 MPa or less and an elongation (El) of 48% or more, the average grain size should be increased. Additionally, to improve the directional anisotropy of strength and elongation, such as a tensile strength deviation ΔTS of 10 MPa or less and an elongation deviation ΔEl of 2% or less, the grains should be distributed as uniformly as possible. When the above average grain size is below 25µm or the standard deviation of the grain size exceeds 12, it may be difficult to secure the mechanical properties to be obtained by the present disclosure. Meanwhile, when the above average grain size exceeds 40µm, a mixed-grain structure may occur, which may actually reduce the material anisotropy.

The present disclosure aims to reduce directional material anisotropy. In automotive steel sheets, in-plane anisotropy is one of the most important factors in press processing. Even when formability is excellent, a material having high anisotropy causes increases earing during press forming and leads to material loss due to defects such as wrinkling. While Δr has traditionally been used as an index representing anisotropy, the present disclosure utilizes ΔTS and ΔEl together to prevent processing defects caused by material anisotropy even in more complex forming modes. The respective measurement methods are as follows.$Δr = \left({r}_{0}-2{r}_{45}+{r}_{90}\right) / 2$
(However, the r₀, r₄₅, and r₉₀ represent the Lankford values (r values) in the 0°, 45°, and 90° directions during the tensile test, respectively.)
   $ΔTS = \left({TS}_{0}-2{TS}_{45}+{TS}_{90}\right) / 2$
(However, the TSₒ, TS₄₅, and TS₉₀ represent the tensile strength TS in the 0°, 45°, and 90° directions during the tensile test, respectively.)
   $ΔEl = \left({El}_{0}-2{El}_{45}+{El}_{90}\right) / 2$
(However, El₀, El₄₅, and El₉₀ represent the elongation El in the 0°, 45°, and 90° directions during the tensile test, respectively.)

Meanwhile, the 0°, 45°, and 90° directions in the tensile test refer to directions of 0°, 45°, and 90°, respectively, with respect to the rolling direction.

Meanwhile, the microstructure of the cold-rolled steel sheet of the present disclosure may be composed of a ferrite matrix and other unavoidable impurity structures. More specifically, since the ferrite is a structure advantageous for ensuring formability, it is theoretically preferable for the microstructure to consist of 100% ferrite; however, the present disclosure may include the ferrite as a matrix while also including impurity structures inevitably formed during the manufacturing process. The present disclosure does not specifically limit the type or fraction of the impurity structures.

As described above, the cold-rolled steel sheet of the present disclosure may have a yield strength YS : 170 MPa or less, a tensile strength TS : 290 MPa or less, an elongation El : 48% or more, an average Lankford value r-bar : 1.9 or more, a Lankford value deviation Δr : 0.6 or less, a tensile strength deviation ΔTS : 10 MPa or less, and an elongation deviation ΔEl : 2% or less, thereby ensuring excellent formability and directional material anisotropy. Meanwhile, in the present disclosure, since it is advantageous for the yield strength, tensile strength, Lankford value deviation, tensile strength deviation, and elongation deviation to be lower, their lower limits are not specifically limited. Since it is advantageous for the elongation and average Lankford value to be higher, their upper limits are not specifically limited.

Hereafter, a manufacturing method for a cold-rolled steel sheet according to an example embodiment of the present disclosure will be described.

First, a slab satisfying the above-described alloy composition and Relational Equation 1 is heated at 1100 to 1250°C. When the heating temperature of the slab is below 1100°C, slab inclusions, etc., are not sufficiently remelted, which may cause material variation and surface defects after hot rolling. On the other hand, when the heating temperature of the slab exceeds 1250°C, problems such as reduced strength or increased anisotropy may occur due to excessive growth of austenite grains. Therefore, the heating temperature of the slab may be 1100 to 1250°C. It is more advantageous for the lower limit of the heating temperature of the slab to be 1120°C, and more advantageous for it to be 1150°C. It is more advantageous for the upper limit of the heating temperature of the slab to be 1200°C.

Subsequently, the heated slab is finished hot-rolled at 900 to 980°C to obtain the hot-rolled steel sheet. When the finish hot-rolling temperature is below 900°C, ferrite transformation occurs during rolling, resulting in an elongated structure, which may lead to a problem in that the material anisotropy of the steel sheet increases. On the other hand, when the finish hot-rolling temperature exceeds 980°C, the austenite grain size may become unevenly coarsened, thereby forming the mixed-grain structure, which may lead to the deterioration in surface quality due to high-temperature processing. Therefore, it is preferable that the finish hot-rolling temperature is between 900 and 980°C. It is more advantageous for the lower limit of the Finish hot-rolling temperature to be 910°C. The upper limit of the finish hot-rolling temperature is more preferably 970°C, even more preferably 960°C, and most preferably 950°C.

Subsequently, the hot-rolled steel sheet is cooled to 700 to 780°C and then coiled. The high-temperature coiling is a very important aspect of the present disclosure. Through the high-temperature coiling, the hot-rolled carbides may be coarsened, and such coarse carbides promote grain growth, thereby inducing an increase in elongation and r-value. When the coiling temperature is below 700°C, the grain size to be obtained in the present disclosure may not be secured, which may lead to problems such as reduced ductility. On the other hand, when the coiling temperature exceeds 780°C, the grain size increases; however, due to the excessively high coiling temperature, the hot-rolled steel sheet oxides such as Mn and Si increase. As a result, even when a subsequent pickling process is performed, some oxides may remain, or even if the oxides are completely removed, an enriched layer may form in the surface layer of the steel sheet, thereby causing surface defects during plating. Furthermore, the deterioration of pickling performance is expected due to the high coiling temperature. Therefore, it is preferable for the coiling temperature to be in the range of 700 to 780°C. The lower limit of the coiling temperature is more advantageous at 710°C, more advantageous at 720°C, and most advantageous at over 750°C.

Subsequently, the above-described coiled hot-rolled steel sheet is cold-rolled with a cold reduction ratio (CR) satisfying the following Relational Equations 3 and 4 to obtain the cold-rolled steel sheet. When the above cold reduction ratio (CR) is CR1 or less, the grain size becomes unevenly coarsened, and as a result, material anisotropy increases, making it impossible to satisfy the conditions of ΔTS of 10 MPa or less and ΔEl of 2% or less as intended in the present disclosure. On the other hand, when the above-described cold reduction ratio (CR) is CR2 or more, the material anisotropy to be obtained by the present disclosure may be secured, but due to the excessive cold reduction ratio, the grain size becomes fine, and the cold rolling loads such as cracks occurring at the edge of the steel sheet may be caused. Meanwhile, FIG. 1 illustrates the cold reduction ratio conditions presented by the present disclosure. [Relational Equation 3] 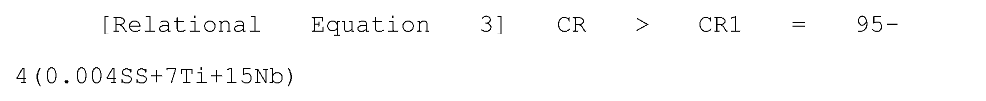 CR > CR1 = 95-4(0.004SS+7Ti+15Nb) [Relational Equation 4] 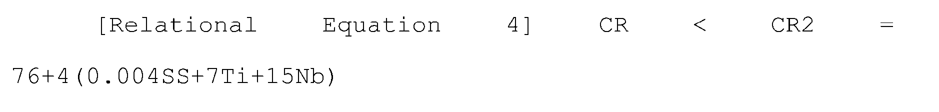 CR < CR2 = 76+4(0.004SS+7Ti+15Nb)
(However: In the above Relational Equations 3 and 4, SS represents the annealing temperature, and Ti and Nb represent the content (wt%) of each alloy component.)

Subsequently, the cold-rolled steel sheet is continuously annealed at 840~870°C. In the present disclosure, annealing at a high temperature is required to satisfy excellent material anisotropy while having an El of 48% or more and an r-bar of 1.9 or more. When the above annealing temperature is below 840°C, the recrystallization of the steel is completed, but the microstructure formed by the cold reduction ratio according to Relational Equations 3 and 4 does not grow sufficiently after nucleation, making it difficult to secure an average grain size of 25µm or more. On the other hand, when the above annealing temperature exceeds 870°C, the possibility of equipment trouble occurring in the field may increase significantly due to the excessively high annealing temperature. In addition, the grain size may become excessively coarse, and as a result, a mixed-grain structure may be formed, thereby rather reducing material anisotropy. Furthermore, the increase in surface oxides causes surface defects in the alloyed hot-dip galvanizing layer during subsequent alloyed hot-dip galvanizing. Therefore, the above continuous annealing temperature may be 840~870°C.

After the continuous annealing step described above, the method may additionally include a step of immersing the continuously annealed steel plate in a molten zinc plating bath at 440 to 500°C to obtain the hot-dip galvanized steel sheet. When the temperature of the molten zinc plating bath is below 440°C, sufficient alloying may not occur due to reduced fluidity of the plating bath. When the temperature of the molten zinc plating bath exceeds 500°C, plating quality may deteriorate due to excessive alloying, such as a decrease in powdering resistance and the formation of plating defects such as dross. Therefore, the temperature of the molten zinc plating bath may be 440 to 500°C. It is more advantageous for the lower limit of the temperature of the molten zinc plating bath to be 450°C. It is more advantageous for the upper limit of the temperature of the molten zinc plating bath to be 490°C.

After the step of obtaining the hot-dip galvanized steel sheet, the method may additionally include a step of obtaining the alloyed hot-dip galvanized steel sheet by alloying the hot-dip galvanized steel sheet at 450 to 540°C. When the alloying temperature is below 450°C, unplated areas may occur across the entire width of the steel sheet. On the other hand, when the alloying temperature exceeds 540°C, the excessive alloying leads to the formation of a large amount of brittle Fe-Zn intermetallic compounds (Γ), resulting in poor powdering characteristics. Therefore, the alloying temperature may be 450 to 540°C. It is advantageous for the lower limit of the alloying temperature to be 460°C. It is more advantageous for the upper limit of the alloying temperature to be 530°C, and even more advantageous for the upper limit of the alloying temperature to be 520°C.

After the step of obtaining the alloyed hot-dip galvanized steel sheet, the method may further include a step of temper rolling the alloyed hot-dip galvanized steel sheet with a reduction ratio of 0.20 to 1.0%. When the reduction ratio during the temper rolling is below 0.2%, it is disadvantageous in terms of controlling the plate shape, and there is a risk that plating surface defects such as dross may occur. On the other hand, when the reduction ratio during the temper rolling exceeds 1.0%, it may lead to material deterioration, such as the increase in yield strength and the slight decrease in elongation. Therefore, the reduction ratio during the temper rolling may be 0.20 to 1.0%. It is more advantageous for the lower limit of the reduction ratio during the temper rolling to be 0.30%. It is more advantageous for the upper limit of the reduction ratio during the temper rolling to be 0.80%, more advantageous for 0.60%, and most advantageous for 0.50%.

### Mode for Invention

Hereinafter, the present disclosure will be described in more detail with reference to Examples. However, it should be noted that the following Examples are only for illustrating the present disclosure in more detail and are not intended to limit the scope of the present disclosure. This is because the scope of the present disclosure is determined by the matters described in the claims and the matters reasonably inferred therefrom.

### (Example)

A slab having the alloy composition listed in Table 1 below was heated to 1200°C and then finish hot-rolled under the conditions listed in Table 2 below to manufacture a hot-rolled steel sheet. Subsequently, the hot-rolled steel sheet was cooled to 750°C, coiled, and then cold-rolled under the cold reduction ratio conditions listed in Table 2 below to manufacture a cold-rolled steel sheet. Thereafter, the cold-rolled steel sheet was continuously annealed under the conditions listed in Table 2 below. The microstructure, X-ray diffraction integrated intensity ratio (Equation 2), and mechanical properties of the cold-rolled steel sheet thus manufactured were measured, and the results are shown in Table 3 below. Subsequently, the cold-rolled steel sheet was immersed in a molten zinc plating bath at 460°C to obtain a hot-dip galvanized steel sheet, and then alloyed at 520°C to manufacture an alloyed hot-dip galvanized steel sheet. Thereafter, the alloyed hot-dip galvanized steel sheet was temper-rolled at a reduction ratio of 0.4%. The powdering resistance of the alloyed hot-dip galvanized steel sheet thus manufactured was measured, and the results are shown in Table 3 below.

The type and fraction of microstructures were measured by photographing an arbitrary point at a magnification of 200x using scanning electron microscopy (SEM) at a position corresponding to 1/4 of the thickness of the cold-rolled steel sheet, and the microstructures of all steel grades were 100% ferrite.

An average grain size and a standard deviation of a grain size of the microstructure were measured by photographing an arbitrary point at a magnification of 200x using the scanning electron microscopy (SEM) at a position corresponding to 1/4 of the thickness of the cold-rolled steel sheet, followed by analyzing crystal orientations using an electron back scattering diffraction (EBSD) analyzer equipped in the SEM.

The X-ray diffraction integrated intensity ratio (Equation 2) was measured at a position corresponding to 1/4 of the thickness of the cold-rolled steel sheet, and the intensity ratio of each component represents a relative ratio of the X-ray diffraction integrated intensity of each component with respect to the X-ray diffraction integrated intensity of a non-oriented standard specimen.

Among the mechanical properties, yield strength YS, tensile strength TS, and elongation El were measured by preparing tensile test specimens conforming to JIS No. 5 from the cold-rolled steel sheet and performing tensile tests on the specimens in a rolling direction. The average Lankford value r-bar was measured using the tensile test specimens in accordance with JIS Z2241. Δr, ΔTS, and ΔEl, which represent material anisotropy, were calculated using the r-values, TS, and El measured in directions of 0°, 45°, and 90° with respect to the rolling direction during the tensile test.

The powdering resistance was evaluated by attaching a tape to a surface of a specimen cut from the alloyed hot-dip galvanized steel sheet to have a length L of 60 mm and a width W of 30 mm, performing a bending test at 60° on the specimen, removing the tape from the specimen, and measuring a width of Zn powder adhered to the tape. In general, when the width of the Zn powder is 4 mm or less, the plating properties are evaluated as good, whereas when it exceeds 4 mm, the plating properties are evaluated as poor.

**[Table 1]**

| Steel grade No. | Alloy composition (wt%) | | | | | | | | | |
|---|---|---|---|---|---|---|---|---|---|---|
| | C | Si | Mn | P | S | Sol.A l | Ti | Nb | N | Equat ion 1 |
| Inven tive Steel 1 | 0.001 1 | 0.02 | 0.10 | 0.011 | 0.006 | 0.021 | 0.050 | 0.003 | 0.002 0 | 2.54 |
| Inven tive Steel 2 | 0.001 2 | 0.02 | 0.11 | 0.008 | 0.005 | 0.034 | 0.055 | 0.005 | 0.002 0 | 3.01 |
| Inven tive Steel 3 | 0.001 2 | 0.04 | 0.07 | 0.005 | 0.004 | 0.045 | 0.061 | 0.004 | 0.001 5 | 3.96 |
| Inven tive Steel 4 | 0.001 9 | 0.01 | 0.06 | 0.009 | 0.004 | 0.043 | 0.058 | 0.006 | 0.001 0 | 3.59 |
| Inven tive Steel 5 | 0.001 3 | 0.02 | 0.05 | 0.013 | 0.006 | 0.042 | 0.055 | 0.005 | 0.001 5 | 2.98 |
| Inven tive Steel 6 | 0.001 9 | 0.03 | 0.04 | 0.011 | 0.004 | 0.037 | 0.053 | 0.002 | 0.001 8 | 2.73 |
| Inven tive Steel 7 | 0.001 8 | 0.02 | 0.11 | 0.009 | 0.007 | 0.033 | 0.065 | 0.006 | 0.001 3 | 3.07 |
| Compa rativ e Steel 1 | 0.001 9 | 0.02 | 0.15 | 0.035 | 0.002 | 0.033 | 0.063 | 0.006 | 0.002 0 | 3.79 |
| Compa rativ e Steel 2 | 0.001 5 | 0.50 | 0.16 | 0.009 | 0.004 | 0.035 | 0.048 | 0.007 | 0.002 1 | 2.69 |
| Compa rativ e Steel 3 | 0.001 3 | 0.01 | 0.07 | 0.005 | 0.007 | 0.045 | 0.010 | 0.009 | 0.002 8 | 0.58 |
| Compa rativ e Steel 4 | 0.001 1 | 0.03 | 0.08 | 0.005 | 0.005 | 0.046 | 0.055 | 0.055 | 0.001 1 | 5.32 |
| Inven tive Steel 8 | 0.000 9 | 0.04 | 0.015 | 0.009 | 0.003 | 0.036 | 0.050 | 0.005 | 0.001 5 | 3.97 |
| Compa rativ e Steel 5 | 0.001 7 | 0.02 | 0.15 | 0.010 | 0.004 | 0.048 | 0 | 0.005 | 0.002 1 | 0.13 |
| Compa rativ e Steel 6 | 0.001 8 | 0.01 | 0.07 | 0.009 | 0.005 | 0.046 | 0.060 | 0.002 | 0.006 5 | 1.65 |
| Compa rativ e Steel 7 | 0.001 1 | 0.04 | 0.58 | 0.013 | 0.006 | 0.025 | 0.050 | 0.007 | 0.001 5 | 2.89 |
| Compa rativ e Steel 8 | 0.005 1 | 0.03 | 0.06 | 0.012 | 0.005 | 0.035 | 0.050 | 0.005 | 0.001 4 | 1.61 |
| Compa rativ e Steel 9 | 0.002 3 | 0.04 | 0.17 | 0.012 | 0.005 | 0.044 | 0.090 | 0.004 | 0.001 1 | 4.50 |
| Inven tive Steel 9 | 0.001 6 | 0.03 | 0.09 | 0.008 | 0.004 | 0.036 | 0.060 | 0.004 | 0.002 1 | 3.17 |
| [Equation 1] (Ti/48+Nb/93)/(C/12+N/14+S/32) | | | | | | | | | | |

**[Table 2]**

| Divisi on | Steel grade No. | Finish hot-rolling temperature (°C) | Cold reduction ratio (CR)(%) | CR1 | CR2 | Continuous annealing temperature (° C) |
|---|---|---|---|---|---|---|
| Invent ive Exampl e 1 | Invent ive Steel 1 | 930 | 81 | 79.8 | 91. 2 | 850 |
| Invent ive Exampl e 2 | Invent ive Steel 2 | 920 | 84 | 79.5 | 91. 5 | 855 |
| Invent ive Exampl e 3 | Invent ive Steel 3 | 925 | 85 | 79.3 | 91. 7 | 860 |
| Invent ive Exampl e 4 | Invent ive Steel 4 | 920 | 82 | 79.5 | 91. 5 | 845 |
| Compar ative Exampl e 1 | Invent ive Steel 4 | 870 | 82 | 79.5 | 91. 5 | 845 |
| Invent ive Exampl e 5 | Invent ive Steel 5 | 950 | 80 | 79.6 | 91. 4 | 850 |
| Compar ative Exampl e 2 | Invent ive Steel 5 | 950 | 85 | 80.4 | 90. 6 | 800 |
| Invent ive Exampl e 6 | Invent ive Steel 6 | 930 | 82 | 79.7 | 91. 3 | 855 |
| Invent ive Exampl e 7 | Invent ive Steel 7 | 935 | 84 | 79.1 | 91. 9 | 860 |
| Compar ative Exampl e 3 | Compar ative Steel 1 | 925 | 85 | 79.3 | 91. 7 | 850 |
| Compar ative Exampl e 4 | Compar ative Steel 2 | 940 | 85 | 79.6 | 91. 4 | 850 |
| Compar ative Exampl e 5 | Compar ative Steel 3 | 933 | 85 | 80.5 | 90. 5 | 855 |
| Compar ative Exampl e 6 | Compar ative Steel 3 | 850 | 85 | 80.4 | 90. 6 | 860 |
| Compar ative Exampl e 7 | Invent ive Steel 8 | 921 | 82 | 76.5 | 94. 5 | 855 |
| Compar ative Exampl e 8 | Compar ative Steel 4 | 920 | 75 | 79.5 | 91. 5 | 860 |
| Compar ative Exampl e 9 | Compar ative Steel 5 | 910 | 82 | 81.2 | 89. 8 | 845 |
| Compar ative Exampl e 10 | Compar ative Steel 6 | 915 | 85 | 79.6 | 91. 4 | 850 |
| Compar ative Exampl e 11 | Compar ative Steel 7 | 925 | 95 | 79.4 | 91. 6 | 860 |
| Compar ative Exampl e 12 | Compar ative Steel 8 | 910 | 80 | 79.6 | 91. 4 | 855 |
| Compar ative Exampl e 13 | Compar ative Steel 9 | 916 | 83 | 78.5 | 92. 5 | 860 |
| Compar ative Exampl e 14 | Invent ive Steel 9 | 925 | 84 | 78.7 | 92. 3 | 900 |
| [CR1] 95-4(0.004SS+7Ti+15Nb) | | | | | | |
| [CR2] 76+4(0.004SS+7Ti+15Nb) | | | | | | |

**[Table 3]**

| Divisi on | Aver age grai n size (µm) | Grain size stand ard devia tion | Equa tion 2 | YS (MPa) | TS (MPa) | El (%) | r-bar | Δr | ΔTS | ΔEl | Powde ring resis tance (mm) |
|---|---|---|---|---|---|---|---|---|---|---|---|
| Invent ive Exampl e 1 | 29 | 9 | 5.3 | 148 | 288 | 48 | 2.1 | 0.4 | 9 | 0 | 3.2 |
| Invent ive Exampl e 2 | 30 | 6 | 7.2 | 145 | 285 | 49 | 2.2 | 0.4 | 5 | 1 | 3.8 |
| Invent ive Exampl e 3 | 33 | 8 | 6.9 | 151 | 279 | 50 | 2.1 | 0.3 | 7 | 1 | 2.6 |
| Invent ive Exampl e 4 | 31 | 8 | 6.6 | 155 | 284 | 51 | 2.2 | 0.3 | 8 | 1 | 3.3 |
| Compar ative Exampl e 1 | 29 | 13 | 3.9 | 165 | 288 | 48 | 1.8 | 0.8 | 15 | 3 | 3.5 |
| Invent ive Exampl e 5 | 32 | 7 | 4.9 | 135 | 278 | 49 | 2.3 | 0.2 | 5 | 0 | 3.4 |
| Compar ative Exampl e 2 | 19 | 8 | 2.9 | 199 | 295 | 44 | 1.7 | 0.3 | 15 | 3 | 3.4 |
| Invent ive Exampl e 6 | 27 | 8 | 5.2 | 144 | 289 | 48 | 2.2 | 0.2 | 4 | 0 | 2.9 |
| Invent ive Exampl e 7 | 31 | 8 | 6.8 | 149 | 279 | 52 | 2.1 | 0.3 | 6 | 1 | 3.1 |
| Compar ative Exampl e 3 | 22 | 6 | 2.1 | 199 | 328 | 44 | 1.7 | 0.3 | 8 | 1 | 2.1 |
| Compar ative Exampl e 4 | 24 | 10 | 3.9 | 188 | 299 | 45 | 1.6 | 0.4 | 4 | 2 | 2.7 |
| Compar ative Exampl e 5 | 22 | 6 | 2.1 | 211 | 305 | 42 | 1.5 | 0.4 | 20 | 6 | 3.3 |
| Compar ative Exampl e 6 | 28 | 15 | 1.9 | 233 | 311 | 40 | 1.4 | 0.3 | 55 | 5 | 3.3 |
| Compar ative Exampl e 7 | 18 | 6 | 5.5 | 199 | 305 | 44 | 2.2 | 0.3 | 8 | 1 | 3.7 |
| Compar ative Exampl e 8 | 28 | 9 | 2.2 | 175 | 278 | 48 | 1.6 | 0.8 | 22 | 4 | 3.5 |
| Compar ative Exampl e 9 | 22 | 6 | 1.9 | 245 | 288 | 42 | 1.3 | 0.7 | 35 | 5 | 3.3 |
| Compar ative Exampl e 10 | 19 | 5 | 2.1 | 201 | 287 | 44 | 1.5 | 0.8 | 35 | 4 | 3.4 |
| Compar ative Exampl e 11 | 16 | 4 | 4.6 | 198 | 301 | 42 | 1.9 | 0.4 | 8 | 0 | 3.6 |
| Compar ative Exampl e 12 | 22 | 6 | 3.2 | 201 | 299 | 43 | 1.7 | 0.7 | 15 | 3 | 3.3 |
| Compar ative Exampl e 13 | 29 | 9 | 6.9 | 155 | 277 | 49 | 2.2 | 0.7 | 7 | 1 | 6.5 |
| Compar ative Exampl e 14 | 55 | 22 | 5.3 | 144 | 268 | 54 | 2.3 | 0.9 | 35 | 4 | 5.5 |
| [Equation 2] [X(222)+X(554) ] / [X(200) +X(110) +X(112) ] | | | | | | | | | | | |

As can be seen from Tables 1 to 3, it could be confirmed that, in the case of Inventive Examples 1 to 7 satisfying the conditions proposed in the present disclosure, excellent formability and directional material anisotropy are achieved. In addition, it could be confirmed that the powdering resistance is at a satisfactory level.

It could be confirmed that Comparative Examples 1 to 14 do not satisfy the alloy composition or manufacturing conditions proposed in the present disclosure and therefore fail to meet the desired microstructure conditions or the X-ray diffraction integrated intensity ratio, resulting in unsatisfactory mechanical properties and powdering resistance.

## Claims

1. A cold-rolled steel sheet, comprising:
by wt%, carbon (C): 0.0030% or less (excluding 0%), manganese (Mn): 0.20% or less (excluding 0%), silicon (Si): 0.10% or less (excluding 0%), phosphorus (P): 0.0150% or less (excluding 0%), sulfur (S): 0.010% or less (excluding 0%), nitrogen (N): 0.0030% or less (excluding 0%), acid-soluble aluminum (sol.Al): 0.010 to 0.050%, titanium (Ti): 0.030 to 0.070%, niobium (Nb): 0.0010 to 0.010%, and the balance being Fe and other unavoidable impurities,
wherein Relational Equation 1 below is satisfied, and
Relational Equation 2 below is satisfied, [Relational Equation 1] 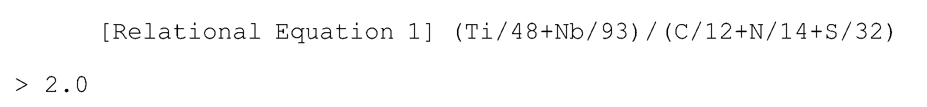 (Ti/48+Nb/93)/(C/12+N/14+S/32) > 2.0 [Relational Equation 2] $\left[X\left(222\right)+X\left(554\right)\right] / \left[X\left(200\right)+X\left(110\right)+X\left(112\right)\right] > 4.0$
where, in Relational Equation 1, Ti, Nb, C, N, and S represent the content (wt%) of each alloying component, and in Relational Equation 2, X(222), X(554), X(200), X(110), and X(112) represent an X-ray diffraction integrated intensity ratio of planes {222}, {554}, {200}, {110}, and {200} parallel to a plane at a position of 1/4t (t: steel plate thickness) of the alloyed hot-dip galvanized steel sheet, respectively.

2. The cold-rolled steel sheet of claim 1, wherein
the cold-rolled steel sheet has an average grain size of 25 to 40 µm.

3. The cold-rolled steel sheet of claim 1, wherein
a standard deviation of a grain size of the cold-rolled steel sheet is 12 or less.

4. The cold-rolled steel sheet of claim 1, wherein
a microstructure of the cold-rolled steel sheet is composed of a ferrite matrix and other unavoidable impurity structures.

5. The cold-rolled steel sheet of claim 1, wherein
the cold-rolled steel sheet has a yield strength (YS) : 170 MPa or less, a tensile strength (TS) : 290 MPa or less, an elongation (El) : 48% or more, a tensile strength deviation (ΔTS) : 10 MPa or less, and an elongation deviation (ΔEl) : 2% or less.

6. The cold-rolled steel sheet of claim 1, wherein
the cold-rolled steel sheet has an average Lankford value r-bar : 1.9 or more and a Lankford value deviation (Δr) : 0.6 or less.

7. A manufacturing method for a cold-rolled steel sheet, comprising
heating a slab satisfying Relational Equation 1 below at 1100 to 1250°C, the slab including, by wt%, carbon (C): 0.0030% or less (excluding 0%), manganese (Mn): 0.20% or less (excluding 0%), silicon (Si): 0.10% or less (excluding 0%), phosphorus (P): 0.0150% or less (excluding 0%), sulfur (S): 0.010% or less (excluding 0%), nitrogen (N): 0.0030% or less (excluding 0%), acid-soluble aluminum (sol.Al): 0.010 to 0.050%, titanium (Ti): 0.030 to 0.070%, niobium (Nb): 0.0010 to 0.010%, and the balance being Fe and other unavoidable impurities,
obtaining a hot-rolled steel sheet by finishing hot rolling the heated slab at 900 to 980°C;
cooling and coiling the hot-rolled steel sheet at 700 to 780°C;
obtaining a cold-rolled steel sheet by cold rolling the coiled hot-rolled steel sheet at a cold reduction ratio (CR) satisfying Relational Equations 3 and 4 below; and
continuously annealing the cold-rolled steel sheet at 840 to 870°C, [Relational Equation 1] 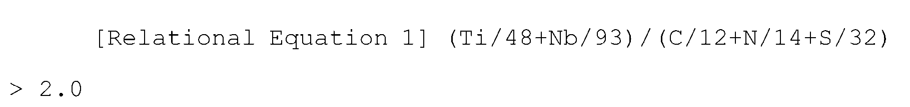 (Ti/48+Nb/93)/(C/12+N/14+S/32) > 2.0 [Relational Equation 3] 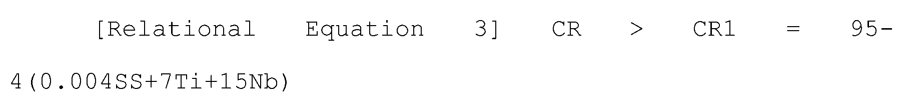 CR > CR1 = 95-4(0.004SS+7Ti+15Nb) [Relational Equation 4] 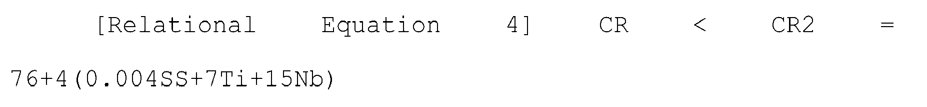 CR < CR2 = 76+4(0.004SS+7Ti+15Nb)
where, in Relational Equation 1, Ti, Nb, C, N, and S represent a content (wt%) of each alloy component, and in Relational Equations 3 and 4, SS represents the annealing temperature, and Ti and Nb represent the content (wt%) of each alloy component.

8. The manufacturing method of claim 7, further comprising:
after the continuous annealing, obtaining a hot-dip galvanized steel sheet by immersing the continuously annealed steel plate in a molten zinc plating bath at 440 to 500°C.

9. The manufacturing method of claim 8, further comprising:
after the obtaining of the hot-dip galvanized steel sheet, obtaining an alloyed hot-dip galvanized steel sheet by alloying the hot-dip galvanized steel sheet at 450 to 540°C.

10. The manufacturing method of claim 9, further comprising:
after the obtaining of the alloyed hot-dip galvanized steel sheet, temper rolling the alloyed hot-dip galvanized steel sheet with a reduction ratio of 0.20 to 1.0%.
